(19) Europäisches Patentamt
European Patent Office
Office européen des brevets

(11) **EP 3 560 071 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **17822661.9**

(22) Anmeldetag: **20.12.2017**

(51) Internationale Patentklassifikation (IPC):
**H02K 1/14** *(2006.01)* **H02K 1/27** *(2022.01)*

(52) Gemeinsame Patentklassifikation (CPC):
**H02K 1/146; H02K 21/22;** H02K 2201/03; H02K 2213/03

(86) Internationale Anmeldenummer:
**PCT/EP2017/083731**

(87) Internationale Veröffentlichungsnummer:
**WO 2018/115074 (28.06.2018 Gazette 2018/26)**

(54) **ELEKTROMOTOR MIT NIEDRIGEM NUTRASTMOMENT**

ELECTRIC MOTOR WITH A LOW COGGING TORQUE

MOTEUR ÉLECTRIQUE À FAIBLE COUPLE DE DÉTENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2016 DE 102016125039**

(43) Veröffentlichungstag der Anmeldung:
**30.10.2019 Patentblatt 2019/44**

(73) Patentinhaber: **ebm-papst Mulfingen GmbH & Co. KG**
**74673 Mulfingen (DE)**

(72) Erfinder:
• **BAUN, Martin**
**74673 Mulfingen (DE)**
• **BEEZ, Ramona**
**97980 Bad Mergentheim (DE)**

(74) Vertreter: **Staeger & Sperling Partnerschaftsgesellschaft mbB Sonnenstraße 19 80331 München (DE)**

(56) Entgegenhaltungen:
CN-Y- 201 018 319     DE-A1-102009 047 239
JP-A- 2004 274 963    JP-A- 2009 189 163
JP-A- 2012 210 105

**Beschreibung**

Die vorliegende Erfindung betrifft die Zahnformgestaltung von permanentmagneterregten Elektromotoren mit einem niedrigen Nutrastmoment sowie solche Elektromotoren mit einer entsprechend ausgebildeten Zahnform.

In elektrischen Maschinen treten wegen verschiedenen Ursachen Oberwellen auf, die zu unerwünschter Drehmomentwelligkeit führen. Man unterscheidet nach elektrisch und nach magnetisch erregten Oberschwingungen, welche durch die Wicklungsauslegung und die Art der Stromeinspeisung hervorgerufen und beeinflusst werden. Magnetische Oberschwingungen resultieren z. B. aus Schwankungen des magnetischen Leitwertes im Magnetkreis. Diese Reluktanzkräfte sind auf konstruktive Inhomogenität (Nutung und Verengungen im Rückenbereich) zurückzuführen.

Dieses Phänomen führt insbesondere in Verbindung mit mechanischen Einflüssen zu Störungen des Bewegungsablaufes und beeinflusst die Regelgenauigkeit und Dynamik der elektrischen Maschine.

Als Verfahren zum Verringern des Nutrastmoments von elektrischen Motoren im allgemeinen Betrieb sind z. B. Schrägungsverfahren zum Verringern des Nutrastmoments bekannt. Bei dem Schrägungsverfahren werden Statorpole oder Rotorpole in einem geschrägten Muster ausgebildet, so dass ein Stator entlang der Axialrichtung des Rotors abweichende bzw. versetzte Drehpositionen aufweist. Bei einem solchen Aufbau sind die Statorpole an einem elektrischen Winkel von 180 Grad abweichend bzw. versetzt, um es dem Stator zu ermöglichen, bei jeder Drehposition die gleiche Luftspaltmenge aufzuweisen.

Der Schrägungswinkel hat jedoch einen Einfluss auf den Nutzungsgrad des Motors. Wenn der Schrägungswinkel zu groß gewählt wird, tritt eine Reduktion bei der Ausnutzungswirksamkeit des magnetischen Flusses auf, was zu einer Verringerung des Ausgangsdrehmoments führt.

Ferner ist aus dem Stand der Technik bekannt, dass zum Verringern des Nutrastmoments das Ausbilden von zusätzlichen Hilfsnuten bzw. Hilfskerben an der Kontur der Zähne verwendet werden. Bei dem bekannten Stand der Technik werden Hilfskerben zusätzlich an solchen Positionen eingefügt, um eine Variation in der Magnetreluktanz zu beseitigen, die in einem Luftspaltabschnitt zwischen den Statorkernen auftritt.

Bei dem im Stand der Technik bekannten Hilfsnuten variieren Magnetreluktanzen, die in den Luftspaltsegmenten zwischen den Statorkernen und den zusätzlichen Kerben auftreten, ungleichmäßig, mit dem Ergebnis, dass Probleme auftreten, bei denen die zusätzlichen Kerben zwar bis zu einem gewissen Grad das Nutrastmoment wirksam verringern, aber keinen befriedigenden Effekt bei der Minimierung des Nutrastmoments erzielen. Die im Stand der Technik verwendeten Hilfsnuten stützen sich auf die Theorie, dass die Hilfsnuten ein zusätzliches Rastmoment erzeugen, das zusätzlich zu dem durch die Nuten hervorgerufenen Rastmoment phasenverschoben ist und dieses somit kompensieren. Die Breite und Tiefer solcher Hilfsnuten sollen daher möglichst denen der Nuten entsprechen, wobei vor allem eine gleiche Tiefe konstruktionsbedingt nicht erzielbar ist, mit der Folge, dass das Nutrastmoment nur geringfügig reduziert wird.

In der DE 28 23 208 C2 wird das Einbringen von Einschnitten in den Polschuhen bei einer Synchronmaschine mit außenliegendem, permanentmagnetischen Erregerteil beschrieben, die aufgrund ihrer magnetischen Wirkung das Ruckmoment reduzieren, wobei bei den Ausführungen allerdings ein nachteiliger Einfluss auf die Drehmomentdichte erfolgt, was im Ergebnis zu einem geringeren Wirkungsgrad führt.

In US 8,664,826 B2 wird die Drehmomentschwankung durch eine Zahnkontur unter der Berücksichtigung des Wirkungsgrads und der Drehmomentdichte reduziert. Der Motor weist hierbei in den Zahnoberflächen, zum Luftspalt zugewandte Aussparungen auf. Eine solche Oberfläche führt jedoch ebenso zu einer Verringerung der Drehmomentdichte und des Wirkungsgrads.

Aus den Druckschriften JP 2009 189163 A, JP 2012 210105 A, CN 201 018 319 Y, DE 10 2009 047239 A1 und JP 2004 274963 A sind weitere Lösungen zum Verringern des Nutrastmoments durch Ausbilden von zusätzlichen Hilfsnuten bzw. Hilfskerben an der Kontur der Zähne bekannt.

Bei den im Stand der Technik vorgeschlagenen Verfahren geht die Reduzierung des Nutrastmoments einher mit einer Verschlechterung der Ausnutzung der Eigenschaften der elektrischen Maschine.

Für Motoren, bei denen eine Vielzahl an Harmonischen im Rastmoment eliminiert werden sollen, ist eine glatte Kontur der Aussparungen, zusätzlich mit dem Gesichtspunkt dennoch gute Ausnutzungseigenschaften zu erzielen, kein wirksames Mittel.

Der Erfindung liegt deshalb die Aufgabe zugrunde vorbesagte Nachteile zu überwinden und die Nutrastmomente bei permanentmagneterregten Elektromotoren zu reduzieren bei Erhalt einer hohen Drehmomentausnutzung.

Diese Aufgabe wird erfindungsgemäß durch die Merkmalskombination gemäß Anspruch 1 gelöst. Weitere Ausführungsformen der Erfindung sind in den abhängigen Ansprüchen 2 - 5 definiert.

Die vorliegende Erfindung löst die Aufgabe, einen Elektromotor zu schaffen, welcher einen Rotor und einen Stator mit einer spezifischen Statorpolgeometrie aufweist, die ein ungleichmäßiges bzw. unsymmetrisches Verteilungsmuster von Nuten an den Zähnen auf der über eine in Umfangsrichtung verlaufende Peripherie des Stators vorsieht, um mittels einer solchen Zahnformgeometrie das Nutrastmoment in dem elektrischen Motor zu minimieren.

Hierzu wird erfindungsgemäß ein Stator zur Anordnung gegenüber einem Rotor eines permanentmagneterregten Elektromotors mit einer Mehrzahl in Umfangsrichtung angeordneter Polsegmente vorgeschlagen, wobei die Polsegmente jeweils aus einem Zahn mit einem Zahnsegment gebildet werden, wobei die Zahnsegmente unmittelbar benachbarter Polsegmente jeweils durch einen Nutschlitz der Breite s zueinander beabstandet sind und wobei die Zahnsegmente der Zähne an ihrer jeweils dem Rotor zugewandten Stirnseite wenigstens zwei Ausnehmungen mit einer Breite b aufweisen und jede der beiden Ausnehmung einen Abstand, gemessen in Umfangsrichtung von der Mitte dieser Ausnehmung zur Mitte des jeweils am nächsten benachbarten Nutenschlitzes besitzt, der geringer ist, als der Abstand zur Mitte des Polsegments in Umfangrichtung betrachtet, wodurch eine gegenüber der Nutteilung des Stators nicht-äquidistante Anordnung der Ausnehmungen erzielt wird.

Erfindungsgemäß ist vorgesehen, dass für die Position der zwei Ausnehmungen in dem jeweiligen Zahn folgender Zusammenhang besteht:

$$a \neq b$$

$$a = 0 \ldots \frac{1}{3} \cdot \left( a + \frac{b}{2} \right)$$

wobei

a = der Abstand jeweils einer Ausnehmung gemessen in Umfangsrichtung von der Mitte dieser Ausnehmung zur Mitte des am nächsten benachbarten Nutenschlitzes ist und

b = der Abstand zwischen den zwei bzw. den zwei äußeren Ausnehmungen in (bei mehr als zwei Ausnehmungen) Umfangsrichtung gemessen.

In einer anderen möglichen Ausführung, welche nicht Teil der beanspruchten Erfindung ist und die insbesondere für zwei Ausnehmungen in einem Zahn vorgesehen ist, ist eine äquidistante Anordnung der Ausnehmungen in Umfangsrichtung vorgesehen, somit die Bedingung a = b erfüllt. Die Zahnsegmente unmittelbar benachbarter Polsegmente sind hierbei jeweils durch einen Nutschlitz der Breite s zueinander beabstandet und in den Zahnsegmenten der Zähne sind an ihrer jeweils dem Rotor zugewandten Stirnseite zwei Ausnehmungen mit einer Breite b eingebracht und jede der beiden Ausnehmung einen Abstand, gemessen in Umfangsrichtung von der Mitte dieser Ausnehmung zur Mitte des jeweils am nächsten benachbarten Nutenschlitzes besitzt, der geringer oder gleich ist, als oder wie der halbe Abstand zur Mitte des Polsegments in Umfangrichtung betrachtet, wodurch eine gegenüber der Nutteilung des Stators äquidistante Anordnung der Ausnehmungen erzielt wird, wenn der Abstand gleich dem halben Abstand zur Mitte des Polsegments in Umfangrichtung betrachtet ist.

In einer weiteren bevorzugten Ausgestaltung der Erfindung ist vorgesehen, dass sich die Nutteilung folgendermaßen bestimmt: Nutteilung = (2 * a + b).

Weiter vorteilhaft ist es, wenn die Breite der Ausnehmungen gegenüber der Breite S des Nutzschlitzes wie folgt definiert ist: $0,75 * s \leq c \leq 2,5 * s$.

Als Form der Ausnehmung in der Stirnseite der Zahnsegmente können unterschiedliche Formen vorgesehen sein. Erfindungsgemäß besitzen die Ausnehmungen eine kastenförmige Querschnittsform.

Erfindungsgemäß ist vorgesehen, dass vier Ausnehmungen vorhanden sind, wovon die zwei jeweils weiter Außen liegende Ausnehmungen mit einer Querschnittsfläche A1 und die zwei dazwischen liegende Ausnehmungen mit einer Querschnittsfläche A2 an den Zahnsegmenten der Zähne vorgesehen sind, wobei folgende Bedingung bzw. folgender Zusammenhang zwischen den Querschnittsflächen besteht: $0 < A2 < 0,25 * A1$.

In einer ebenfalls bevorzugten Ausgestaltung der Erfindung ist vorgesehen, dass die Polsegmente gegenüber einer radial durch das jeweilige Polsegment verlaufenden Mittelachse achsensymmetrisch ausgebildet sind.

Ein weiterer Aspekt der vorliegenden Erfindung betrifft einen permanentmagneterregten Elektromotor mit einem wie zuvor beschriebenen Stator und einem Rotor, wobei zwischen dem Stator und dem Rotor im Bereich zwischen den Ausnehmungen ein Luftspalt der Spaltbreite g vorhanden ist und dass für die Tiefe t der Ausnehmungen folgendes gilt: $0,25 * g \leq t \leq 1,3 * g$.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig. 1          eine Teilansicht durch einen Elektromotor mit einem erfindungsgemäßen Stator;

Fig. 2a - 2d    nicht erfindungsgemäße Ausgestaltungen der Zähne der Polsegmente;

Fig. 3a - 3d      weitere beispielhafte Ausgestaltungen der Zähne der Polsegmente

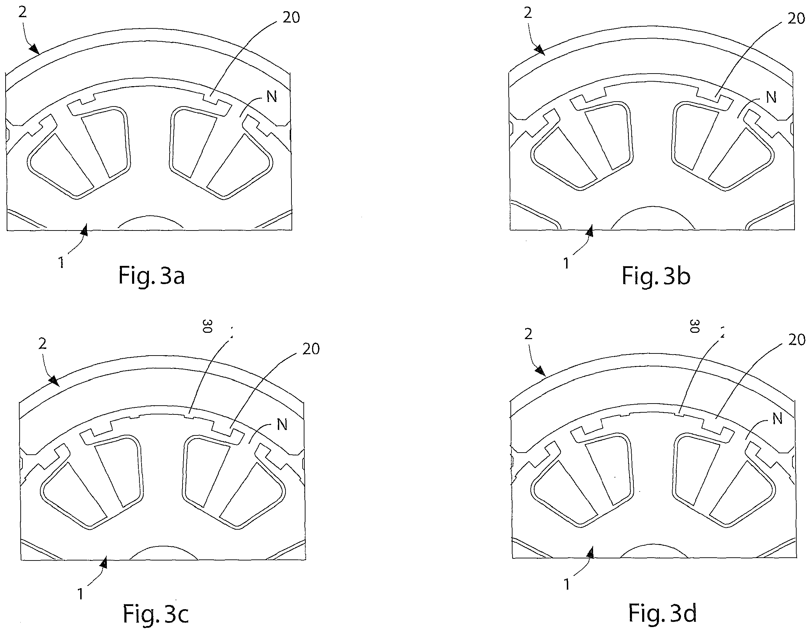

(Fig.3a und 3b      nicht erfindungsgemäß);

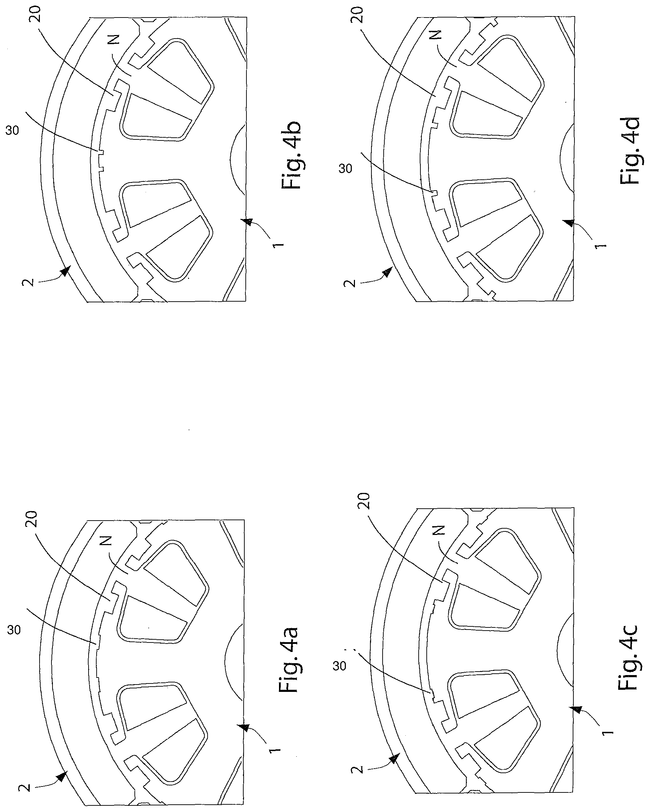

Fig. 4a - 4d      weitere beispielhafte Ausgestaltungen der Zähne der Polsegmente und

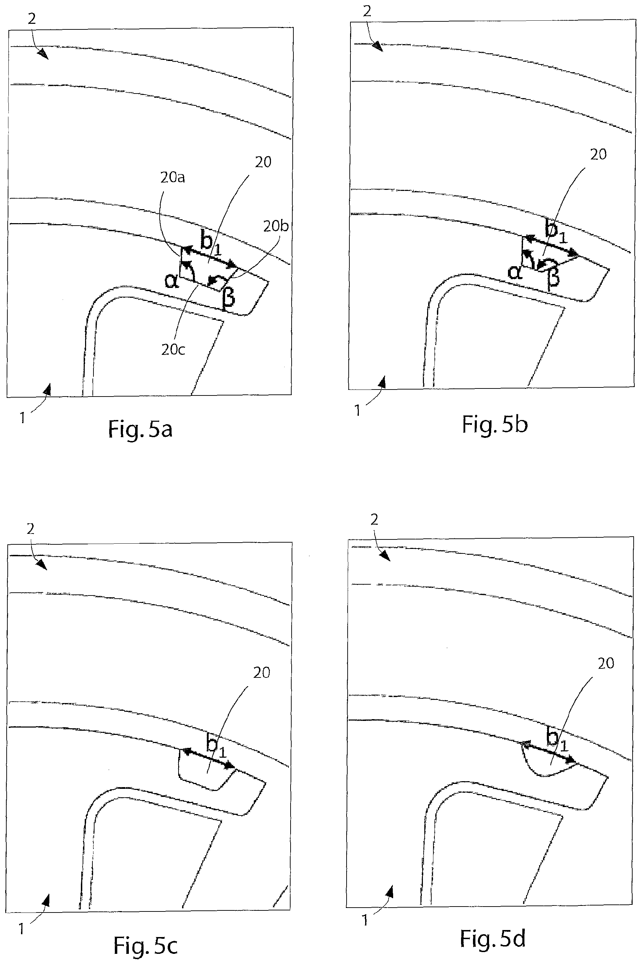

Fig. 5a - 5d      nicht erfindungsgemäße Ausgestaltungen der Ausnehmungen in den Zähnen der Polsegmente.

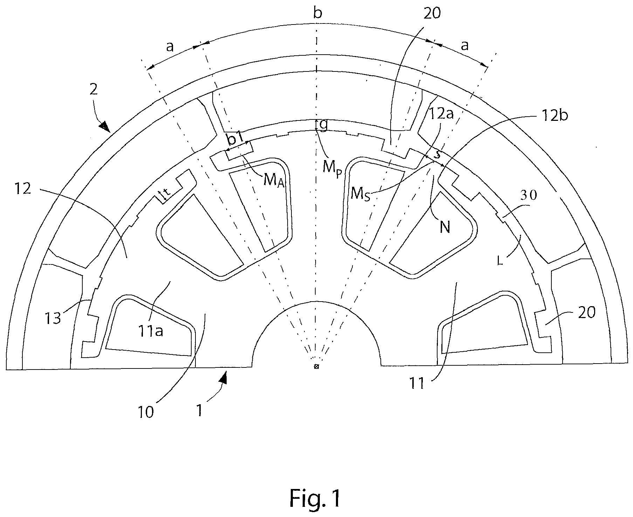

Im Folgenden wird die Erfindung anhand der Figuren 1 bis 5d näher erläutert, wobei gleiche Bezugszeichen auf gleiche strukturelle und/oder funktionale Merkmale hinweisen.

Die Figur 1 zeigt einen Ausschnitt eines permanentmagneterregter Elektromotors mit einem Stator 1 und einem Rotor 2. Der Stator 1 verfügt über einer Mehrzahl in Umfangsrichtung angeordneter Polsegmente 10 bestehend aus jeweils einem Zahn 11 mit einem Zahnhals 11a und mit einem Zahnsegment 12. Der hier gezeigte Stator ist als außengenuteter Stator ausgebildet, bei dem zwischen benachbarten Zahnsegmenten 12 Nuten ausgebildet sind, um die herum der Rotor 2 angeordnet ist. Die Nutschlitze dienen der Möglichkeit der Bewicklung der Polsegmente 10 in einer bekannten Wickeltechnik. Unmittelbar benachbarte Polsegmente 10 sind demnach jeweils durch einen Nutschlitz N der Breite s zueinander in Umfangsrichtung zwischen den Seitenflanken 12a, 12b der Zahnsegmente 12 beabstandet. Die Anzahl und der Abstand der Nuten bestimmt die Nutteilung.

Die Zahnsegmente 12 der Zähne 11 weisen an ihrer jeweils dem Rotor 2 zugewandten Stirnseite 13 zwei Ausnehmungen 20 mit einer Breite b1 in Umfangsrichtung gemessen auf.

Jede der beiden kastenförmigen Ausnehmung 20 hat einen Abstand a, ebenfalls gemessen in Umfangsrichtung von der Mitte $M_A$ dieser Ausnehmung 20 zur Mitte $M_s$ des jeweils am nächsten benachbarten Nutenschlitzes N, der geringer ist, als der Abstand zur Mitte $M_P$ des Polsegments 10, wodurch eine gegenüber der Nutteilung des Stators 1 nicht-äquidistante Anordnung der Ausnehmungen 20 erzielt wird. Wie deutlich in der Figur 1 zu erkennen ist, sind demnach die Ausnehmungen 20 näher zum Nutschlitz hin positioniert als zur Mitte des Polsegments.

Ferner sind zwei weitere Ausnehmungen 30 zwischen den beiden zuvor beschriebenen Ausnehmungen 20 im Zahnsegment 12 eingebracht. Diese innenliegenden Ausnehmungen 30 besitzen eine geringere Querschnittsfläche A2 als die Querschnittsfläche A1 der weiter in Nutrichtung versetzten Ausnehmungen 20, wobei die Querschnittsfläche A2 im vorliegenden Fall etwa 20% der Querschnittsfläche A1 beträgt.

Zwischen dem Stator 1 und dem Rotor 2 ist im Bereich zwischen den jeweiligen Ausnehmungen 20 ein Luftspalt L der Spaltbreite g vorhanden.

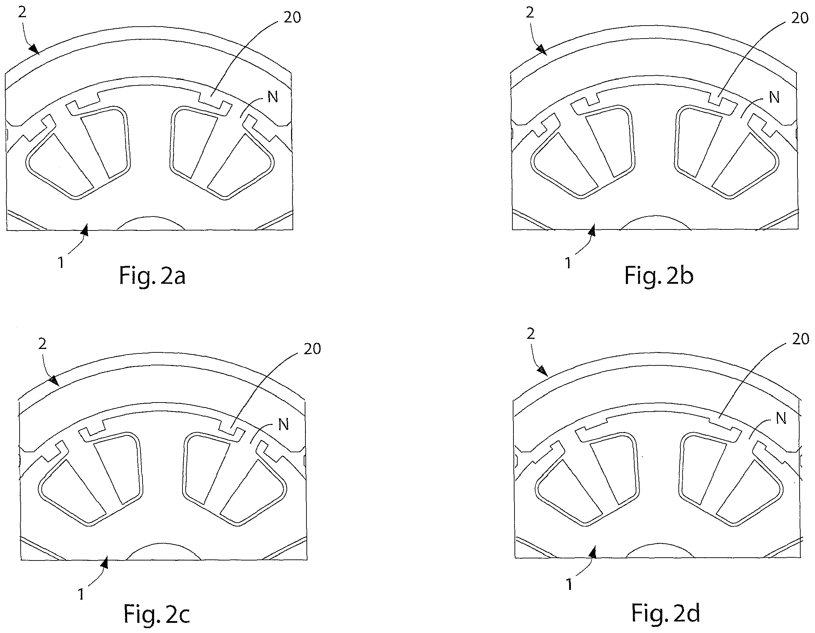

In den Figuren Fig. 2a - 4d sind diverse beispielhafte Ausgestaltungen von Ausnehmungen 20, 30 in den Zähnen 11 der dargestellten Polsegmente 10 gezeigt. In den Ausführungen variieren sowohl die Anzahl der jeweiligen Ausnehmungen 20, 30 , deren Position und deren Form und jeweilige Abmessung. Allen diesen Ausführungen ist gemeinsam, dass jeweils eine gegenüber der Nutteilung des Stators nicht-äquidistante Anordnung der Ausnehmungen 20 in den Zahnsegmenten 12 vorhanden ist. In den Figuren 3c - 4d sind erfindungsgemäße Ausführungen gezeigt, bei denen jeweils vier Ausnehmungen 20, 30 in einem Zahnelement 12 angebracht sind, wovon jeweils zwei Ausnehmungen eine identische Form und Größe aufweisen und nur die inneren Ausnehmungen 30 variiert werden. Bei den Figuren 2a-3b werden die äußeren Ausnehmungen 20 variiert.

In den Figuren Fig. 5a - 5d sind diverse nicht erfindungsgemäße beispielhafte Formen von Ausnehmungen 20 dargestellt, wobei in Fig. 5a eine trapezförmige Ausnehmung 20 mit gleichen Winkeln $\alpha$, $\beta$ dargestellt ist. Die trapezförmige Querschnittsform ist so ausgebildet, dass die eine Seitenwand 20a mit der Bodenfläche 20b einen Winkel $\alpha$ und die zweite Seitenwand 20c mit der Bodenfläche 20b einen Winkel $\beta$ einschließt. Bei einer kantigen Form kann erreicht werden, dass eine Vielzahl an Harmonischen im Rastmoment eliminiert werden.

In der Fig. 5b sind bei einer trapezförmigen Gestaltung die Winkel unterschiedlich gewählt.

In den beiden Ausführungen der Fig. 5c und 5d sind gerundete Ausnehmungen gezeigt.

## Patentansprüche

1.  Stator (1) zur Anordnung gegenüber einem Rotor (2) eines permanentmagneterregten Elektromotors mit einer Mehrzahl in Umfangsrichtung angeordneter Polsegmente (10) bestehend aus jeweils einem Zahn (11) mit einem Zahnsegment (12), wobei die Zahnsegmente (12) unmittelbar benachbarter Polsegmente (10) jeweils durch einen Nutschlitz (N) der Breite s zueinander beabstandet sind, wobei die Zahnsegmente (12) der Zähne (11) an ihrer jeweils dem Rotor (2) zugewandten Stirnseite (13) wenigstens zwei Ausnehmungen (20) mit einer Breite b1 aufweisen und jede der beiden Ausnehmung (20) einen Abstand, gemessen in Umfangsrichtung von der Mitte ($M_A$) dieser Ausnehmung (20) zur Mitte ($M_s$) des jeweils am nächsten benachbarten Nutenschlitzes (N) besitzt, der geringer ist, als der Abstand zur Mitte ($M_P$) des Polsegments (10), wodurch eine gegenüber der Nutteilung des Stators (1) nicht-äquidistante Anordnung der Ausnehmungen (20) erzielt wird, wobei für die Position zweier äußeren Ausnehmungen (20) in einem Zahn (11) folgender Zusammenhang besteht:

$$a \neq b$$

$$a = 0 \ldots \frac{1}{3} \cdot \left( a + \frac{b}{2} \right)$$

wobei "a" der Abstand jeweils einer Ausnehmung (20) gemessen in Umfangsrichtung von der Mitte ($M_A$) dieser Ausnehmung (20) zur Mitte ($M_s$) des am nächsten benachbarten Nutenschlitzes (N) ist und "b" der Abstand zwischen den zwei äußeren Ausnehmungen (20), gemessen in Umfangsrichtung ist, **dadurch gekennzeichnet, daß** vier Ausnehmungen (20,30) vorhanden sind, wovon zwei weiter in Richtung zum Nutenschlitz (N) liegende äußere Ausnehmungen (20) mit einer Querschnittsfläche A1 und zwei dazwischen liegende Ausnehmungen (30) mit einer Querschnittsfläche A2 an den Zahnsegmenten (12) der Zähne (11) vorgesehen sind, wobei folgende Bedingung zwischen den Querschnittsflächen gilt: A2 < 0,25 ∗ A1 und wobei die Ausnehmungen (20,30) eine kastenförmige Querschnittsform besitzen.

2. Stator (1) nach Anspruch 2, **dadurch gekennzeichnet, dass** sich die Nutteilung nach der folgenden Formel bestimmt:

$$\text{Nutteilung} = (2 * a + b)$$

3. Stator (1) nach einem der vorhergehenden Ansprüche, **dadurch gekennzeichnet, dass** die Breite der Ausnehmungen (20) gegenüber der Breite S des Nutzschlitzes (N) wie folgt definiert ist:

$$0{,}75 * s \leq \text{Breite der Ausnehmungen} \leq 2{,}5 * s$$

4. Stator (1) nach einem der vorhergehenden Ansprüche, **dadurch gekennzeichnet, dass** die Polsegmente (10) gegenüber einer radial verlaufenden Mittelachse (14) achsensymmetrisch ausgebildet sind.

5. Permanentmagneterregter Elektromotor mit einem Stator (1) gemäß einem der Ansprüche 1 bis 7 und einem Rotor (2), **dadurch gekennzeichnet, dass** zwischen dem Stator (1) und dem Rotor (2) im Bereich zwischen den Ausnehmungen (20) ein Luftspalt (L) der Spaltbreite g vorhanden ist und dass für die Tiefe t der Ausnehmungen (20) folgendes gilt: $0{,}25 * g \leq t \leq 1{,}3 * g$.

**Claims**

1. A stator (1) for the arrangement opposite to a rotor (2) of an electric motor excited by a permanent magnet with a plurality of pole segments (10) arranged in the circumferential direction, consisting of a respective tooth (11) with a tooth segment (12), wherein the tooth segments (12) of directly adjacent pole segments (10) are respectively spaced apart from one another by a groove slit (N) with the width s, wherein the tooth segments (12) of the teeth (11) have at least two recesses (20) with a with b1 at their respective end side (13) facing the rotor (2) and each of the two recesses (20) possesses a distance, as measured in the circumferential direction from the center ($M_A$) of this recess (20) to the center (Ms) of the respective next adjacent groove slit (N), which is less than the distance to the center ($M_P$) of the pole segment (10), thus achieving a non-equidistant arrangement of the recesses (20) with regard to the groove separation of the stator (1), wherein there is the following connection for the position of two outer recesses (20) in a tooth (11):

$$a \neq b$$

$$a = 0 \dots \frac{1}{3} \cdot \left(a + \frac{b}{2}\right)$$

wherein "a" is the distance of a respective recess (20) as measured in the circumferential direction from the center ($M_A$) of this recess (20) to the center (Ms) of the next adjacent groove slit (N) and "b" is the distance between the two outer recesses (20) as measured in the circumferential direction,
**characterized in that** four recesses (20, 30) are present, two of which are outer recesses (20) further in the direction to the groove slit (N) with a cross-sectional area A1, and two intermediate recesses (30) with a cross-sectional area A2 at the tooth segments (12) of the teeth (11) are provided, wherein the following condition between the cross-sectional areas applies: A2 < 0.25 * A1 and wherein the recesses (20, 30) possess a box-shaped cross-sectional shape.

2. The stator (1) according to claim 2, **characterized in that** the groove separation is determined according to the following formula:

groove separation = (2 * a + b).

3. The stator (1) according to any one of the preceding claims, **characterized in that** the width of the recesses (20) is defined as follows with regard to the width S of the groove slit (N):

$$0.75 * s \leq \text{width of the recesses} \leq 2.5 * s$$

4. The stator (1) according to any one of the preceding claims, **characterized in that** the pole segments (10) are formed in an axis-symmetrical manner with regard to a radially running central axis (14).

5. An electric motor excited by a permanent magnet with a stator (1) according to any one of claims 1 to 7 and a rotor (2), **characterized in that** an air gap (L) of the gap width g is present between the stator (1) and the rotor (2) in the region between the recesses (20) and that the following applies for the depth t of the recesses: $0.25 * g \leq t \leq 1.3 * g$.

**Revendications**

1. Stator (1) destiné à être agencé par rapport à un rotor (2) d'un moteur électrique excité par aimant permanent, comprenant une pluralité de segments polaires (10) disposés dans la direction circonférentielle, respectivement composés d'une dent (11) avec un segment de dent (12), dans lequel les segments de dent (12) de segments polaires (10) directement voisins sont espacés les uns des autres respectivement par une fente d'encoche (N) de largeur s, dans lequel les segments de dent (12) des dents (11) présentent sur leur face frontale (13) respectivement tournée vers le rotor (2) au moins deux évidements (20) d'une largeur b1, et chacun des deux évidements (20) dispose d'une distance, mesurée dans la direction circonférentielle, du centre (MA) de cet évidement (20) au centre (Ms) de la fente d'encoche (N) voisine respectivement la plus proche qui est inférieure à la distance au centre ($M_P$) du segment polaire (10), de manière à obtenir un agencement non équidistant des évidements (20) par rapport au pas d'encoche du stator (1),

dans lequel, pour la position de deux évidements extérieurs (20) dans une dent (11), la relation suivante est donnée :

$$a \neq b$$

$$a = 0 \dots \frac{1}{3} \cdot \left(a + \frac{b}{2}\right)$$

où « a » est la distance respectivement d'un évidement (20), mesurée dans la direction circonférentielle du centre ($M_A$) de cet évidement (20) au centre (Ms) de la fente d'encoche (N) voisine la plus proche, et « b » est la distance entre les deux évidements extérieurs (20), mesurée dans la direction circonférentielle, **caractérisé en ce qu'**il existe quatre évidements (20, 30) dont deux évidements extérieurs (20) situés plus loin en direction de la fente d'encoche (N) et ayant une superficie de la section A1 et deux évidements intermédiaires (30) ayant une superficie de la section A2 au niveau des segments de dent (12) des dents (11) sont prévus, dans lequel la relation suivante entre les superficies de la section s'applique : A2 < 0,25 · A1, et dans lequel les évidements (20, 30) disposent d'une forme de section transversale en forme de caisse.

2. Stator (1) selon la revendication 2, **caractérisé en ce que** le pas des encoches est déterminé selon la formule suivante :

pas des encoches = (2 * a + b)

3. Stator (1) selon l'une quelconque des revendications précédentes, **caractérisé en ce que** la largeur des évidements (20) par rapport à la largeur S de la fente d'encoche (N) est définie comme suit :

$0,75 \cdot s \leq$ largeur des évidements $\leq 2,5 \cdot s$

4. Stator (1) selon l'une quelconque des revendications précédentes, **caractérisé en ce que** les segments polaires (10) sont réalisés à symétrie axiale par rapport à une ligne médiane (14) s'étendant radialement.

5. Moteur électrique excité par aimant permanent, comprenant un stator (1) selon l'une quelconque des revendications 1 à 7 et un rotor (2), **caractérisé en ce qu'**il existe un entrefer (L) de la largeur d'entrefer g entre le stator (1) et le rotor (2), dans la zone entre les évidements (20), et **en ce que** pour la profondeur t des évidements (20) : $0,25 \cdot g \leq t \leq 1,3 \cdot g$ s'applique.

Fig. 1

Fig.2a

Fig.2b

Fig.2c

Fig.2d

Fig.3a

Fig.3b

Fig.3c

Fig.3d

Fig.4a

Fig.4b

Fig.4c

Fig.4d

Fig. 5a

Fig. 5b

Fig. 5c

Fig. 5d

**IN DER BESCHREIBUNG AUFGEFÜHRTE DOKUMENTE**

**In der Beschreibung aufgeführte Patentdokumente**

- DE 2823208 C2
- US 8664826 B2
- JP 2009189163 A
- JP 2012210105 A
- CN 201018319 Y
- DE 102009047239 A1
- JP 2004274963 A